(19) Europäisches Patentamt
European Patent Office
Office européen des brevets

(11) **EP 4 715 493 A1**

(12) **EUROPEAN PATENT APPLICATION**

(43) Date of publication:
**25.03.2026 Bulletin 2026/13**

(21) Application number: **25200466.8**

(22) Date of filing: **05.09.2025**

(51) International Patent Classification (IPC):
**G05B 13/04** (2006.01)

(52) Cooperative Patent Classification (CPC):
**G05B 13/042**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **19.09.2024 US 202418890528**

(71) Applicant: **Honeywell International Inc.
Charlotte, NC 28202 (US)**

(72) Inventors:
• **RAVIPRAKASH, Kiran
Charlotte, 28202 (US)**
• **HART, Peter
Charlotte, 28202 (US)**

(74) Representative: **Houghton, Mark Phillip
Patent Outsourcing Limited
1 King Street
Bakewell, Derbyshire DE45 1DZ (GB)**

(54) **GAIN ADAPTIVE STEPPING IN CONTROL MODELER FOR INTEGRATING CONTROL VARIABLES**

(57) A system includes processor(s) configured to: receive a rate of change process variable, a rate of change high limit, and a rate of change low limit for an integrating control variable of a process from a process controller used to control the process; determine whether a constraint violation has occurred on integrating control variable of process based on rate of change process variable, rate of change high limit, and rate of change low limit; perform gain adaptive stepping on integrating control variable using rate of change process variable, rate of change high limit, and rate of change low limit; determine at least a first set point for at least a first manipulated variable corresponding to the integrating control variable based on the gain adaptive stepping previously performed; and output the at least the first set point for the at least the first manipulated variable to adjust the process.

*FIG. 1*

**Description**

BACKGROUND

Processes can be optimized in various ways. Mathematical models used in Advanced Process Control (APC) and optimization for process industries may be regularly updated to adapt to changing plant operating conditions. Development of mathematical models may follow a standardized process to result in seamless synchronization between online modeling and real time operations.

SUMMARY

A system comprises: at least one processor; and at least one memory communicatively coupled to the at least one processor, the at least one memory storing computer readable instructions that when executed by the at least one processor causes the at least one processor to: receive a rate of change process variable, a rate of change high limit, and a rate of change low limit for an integrating control variable of a process from a process controller used to control the process; determine whether a constraint violation has occurred on the integrating control variable of the process based on the rate of change process variable, the rate of change high limit, and the rate of change low limit; perform gain adaptive stepping on the integrating control variable using the rate of change process variable, the rate of change high limit, and the rate of change low limit; determine at least a first set point for at least a first manipulated variable corresponding to the integrating control variable based on the gain adaptive stepping previously performed; and output the at least the first set point for the at least the first manipulated variable to adjust the process.

A method comprises: receiving a rate of change process variable, a rate of change high limit, and a rate of change low limit for an integrating control variable of a process from a process controller used to control the process; determining whether a constraint violation has occurred on the integrating control variable of the process based on the rate of change process variable, the rate of change high limit, and the rate of change low limit; performing gain adaptive stepping on the integrating control variable using the rate of change process variable, the rate of change high limit, and the rate of change low limit; determining at least a first set point for at least a first manipulated variable corresponding to the integrating control variable based on the gain adaptive stepping previously performed; and outputting the at least the first set point for the at least the first manipulated variable to adjust the process.

A non-transitory computer-readable medium including a set of instructions that, when executed by at least one processor, cause the at least one processor to: receive a rate of change process variable, a rate of change high limit, and a rate of change low limit for an integrating control variable of a process from a process controller used to control the process; determine whether a constraint violation has occurred on the integrating control variable of the process based on the rate of change process variable, the rate of change high limit, and the rate of change low limit; perform gain adaptive stepping on the integrating control variable using the rate of change process variable, the rate of change high limit, and the rate of change low limit; determine at least a first set point for at least a first manipulated variable corresponding to the integrating control variable based on the gain adaptive stepping previously performed; and output the at least the first set point for the at least the first manipulated variable to adjust the process.

BRIEF DESCRIPTION OF DRAWINGS

Understanding that the drawings depict only exemplary embodiments and are not therefore to be considered limiting in scope, the exemplary embodiments will be described with additional specificity and detail through the use of the accompanying drawings, in which:

Figure 1 is a block diagram illustrating an example system.

Figure 2 shows a chart showing an example relationship between the integrator value and the integrator rate of change limit.

Figure 3 is an example method for gain adaptive stepping for integrating control variables.

Figure 4 is a block diagram illustrating example computing system(s) used to implement elements of the example system of Figure 1.

In accordance with common practice, the various described features are not drawn to scale but are drawn to emphasize specific features relevant to the exemplary embodiments.

DETAILED DESCRIPTION

In the following detailed description, reference is made to the accompanying drawings that form a part hereof, and in which is shown by way of illustration specific illustrative embodiments. However, it is to be understood that other embodiments may be utilized and that logical, mechanical, and electrical changes may be made. Furthermore, the method presented in the drawing figures and the specification is not to be construed as limiting the order in which the individual steps may be performed. The following detailed description is, therefore, not to be taken in a limiting sense.

In examples, process control is used within process industries, such as power generation, oil and mineral extraction and refining, petrochemical production, chemical production, pharmaceutical production, food production and processing, semiconductor manufacturing, device assembly, etc. In examples, process controls are implemented within a process control system, which may be implemented, at least in part, within a distributed control system (DCS), programable logic controller (PLC), and/or supervisory control system. In examples, Advanced Process Control (APC) applies control theory to industrial process control systems. In examples, Advanced Process Control (APC) is used in addition to basic process controls. In examples, basic process controls may be built with the process itself to facilitate basic control, operation, and automation requirements. In examples, Advanced Process Control (APC) is added to the basic process controls to improve performance and/or economics of a process. In examples, Advanced Process Control (APC) technology may include any of advanced regulatory control (ARC), advanced process control (APC), multivariable model predictive control (MPC), nonlinear multivariable model predictive control (MPC), sequential control, and/or intelligent control.

In examples, Advanced Process Control (APC) technology uses mathematical models to model and simulate the operation of process(es) in process industries. In examples, Advanced Process Control (APC) technology uses modeling and simulation of the mathematical models to predict future events within the process(es) in the process industries. In examples, the mathematical models are used as a process simulation model to digitally model the fields of power generation, oil and mineral extraction and refining, petrochemical production, chemical production, pharmaceutical production, food production and processing, semiconductor manufacturing, device assembly, etc. In examples, the mathematical models may be modelled after the particular process(es). In examples, multiple mathematical models may be used to model and simulate a single process. In examples, a single mathematical model may be used to model and simulate each process. In examples, the mathematical models used in Advanced Process Control (APC) and optimization for process industries are regularly updated to adapt to changes within the process(es).

In examples, the changes to the process(es) include changes to the operating conditions of the process(es). In examples, the operating conditions of the process(es) may change because of changes in the actual process(es) (such as changes in a temperature of the process(es), flow of the process(es), pressure of the process(es), etc. within the actual process(es)). In examples, the operating conditions of the process(es) may change because of changes in the desired operation of the process (such as desired increase in throughput of the process(es), a desired increase in yield of the process(es), a desired minimization of energy consumption of the process(es), a desired increase in efficiency of the process(es), an increase in quality of the output of the process(es), and/or other desired metrics of the process, such as economic and profit driven metrics). In examples, Advanced Process Control (APC) takes a number of inputs relating to a process and changes in the inputs to the process(es) to predict what is going to happen with the process(es) in the future. In examples, Advanced Process Control (APC) can take many inputs and predict many outputs for a single process or for a plurality of processes. In examples, a primary process may have a number of sub-processes within it. In examples, inputs include independent variables (such as manipulated variables (MVs)) and outputs include dependent variables (such as control variables (CV)).

In examples, a control modeler (CM) is integrated with Advanced Process Control (APC) systems. In examples, the control modeler (CM) is configured to enhance process stepping, data collection, and model identification of process(es) to facilitate advanced process control in process(es). In examples, the control modeler (CM) is configured to help facilitate better models for control according to current operating conditions of the process(es). In examples, a control modeler (CM) is configured to facilitate data collection from process points of the process(es) during open loop testing of the process(es) or from a running process controller (PC) during closed loop testing of the process(es). In examples, the control modeler (CM) handles variables such as manipulated variables (MV), control variables (CV), and disturbance variables (DV) related to the process(es). In examples, the control modeler (CM) is configured with online model identification capability, which automates the redesign of stepper testing signals based on intermediate updated models of the process(es). In examples, tight integration of iterative testing signal design and model identification significantly reduces step testing and commissioning times of the process(es). In examples, this versatility accommodates both open loop and closed loop testing signals for the process(es). In examples, the control modeler (CM) includes a gain adaptive algorithm with manipulated variables (MVs) excitation and control variable (CV) constraint management functionalities to manage process variability and ensure operational efficiency of the process(es). In examples, additional data from a Rate of Change (ROC) control theory algorithm is used with integrating control variables (CVs) for the process(es) to make a more robust gain adaptive algorithm that improves the process(es) according to the current operating conditions while avoiding compromises on the model quality for the process(es).

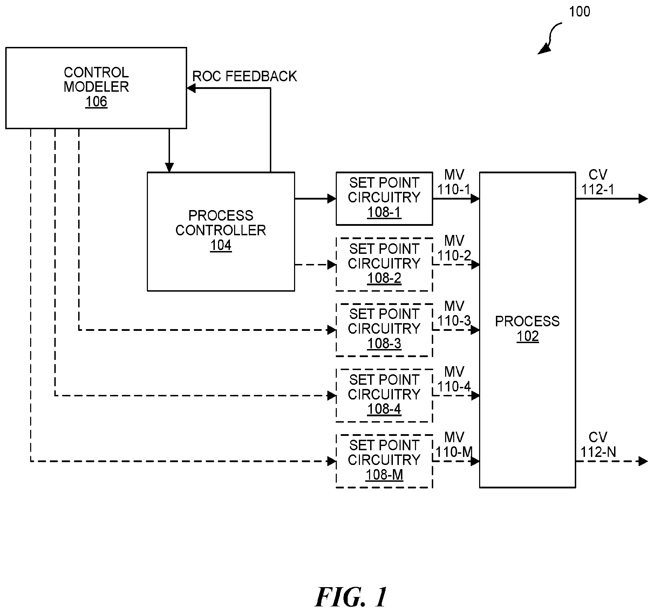

Figure 1 is a block diagram illustrating a system 100. In examples, the system 100 includes an Advanced Process Control (APC) system. The system 100 includes a process 102 controlled using a process controller (PC) 104, a control modeler (CM) 106, and at least one set point circuitry 108 (such as set point circuitry 108-1 and any combination of optional set point circuitry 108 through set point circuitry 108-M). While only one process 102, only one process controller (PC) 104, and only one control modeler (CM) 106 are shown in the system 100 in Figure 1, it is understood that the methodology and features described herein could be applied to various systems and that system 100 could have any quantify of process(es) 102, process controllers (PCs) 104, control modelers (CMs) 106, and at least one set point circuitry 108. In examples, the system 100 may include more than one process 102, more than one process controller (PC) 104, and/or more than one control modeler (CM) 106 depending on the requirements and complexity of the system 100 and/or process(es) 102. In examples, the process 102 has associated manipulated variables (MVs) 110 (such as manipulated variable MV 110-1 and any combination of optional manipulated variables MV 110 through manipulated variable MV 110-M). In examples, the process 102 has associated control variables (CVs) 112 (such as control variable CV-1 and any combination of optional control variables CV through control variable CV-N).

In examples, the manipulated variables (MVs) 110 are input into the process 102 from the left side. In examples, the control variables (CVs) 112 are output from the process 102 on the right side. In examples, a process 102 may be in a facility where temperature, flow controllers, and/or pressure controllers, etc. are controlling the specific process 102. In examples, the process 102 is controlled by adjusting certain inputs by manipulating manipulated variables (MVs) 110 to maintain the control variables (CVs) 112 output from the right of the process.

In examples, each respective manipulated variable (MV) 110 (such as manipulated variable MV 110-1 or any other manipulated variable MV 110) is adjusted using respective set point circuitry 108 (such as set point circuitry 108-1 or any other set point circuitry 108). In examples, each respective set point circuitry 108 is implemented using physical structures and/or computer-programmed functionality using computer programable-circuitry and/or at least one computer-programable processor configured to implement all or part of the functionality described herein. In examples, each respective set point circuitry 108 is implemented as an instantiation of computing system(s) 400 described herein. In examples, each respective set point circuitry 108 receives a set point value from the process controller (PC) 104 and/or the control modeler (CM) 106. In examples, each respective set point circuitry 108 then adjusts something physical to move the respective manipulated variable MV 110 for the process 102 to the desired set point value. In examples, at least some of the respective set point circuitry 108 are configured to adjust something physical by adjusting one or more physical structure (such as adjusting the position of a gate, valve, etc.) to move the respective manipulated variable MV 100 for the process 102 to the desired set point value.

In examples, the process controller (PC) 104 (and any additional process controller (PC) 104) is implemented using physical structures and/or programmed functionality using computer programable-circuitry and/or at least one computer-programable processor configured to implement all or part of the functionality described herein. In examples, the process controller (PC) 104 (and any additional process controller (PC) 104) is implemented as an instantiation of the computing system(s) 400 described herein. In examples, there are constraints that bound and set constraints on the operation of the process 102. In examples, it is desirable to optimize the process 102 by manipulating where the process 102 operates within the constraints that bound and set constraints on the operation of the process 102. In examples, it may be desirable to keep the process 102 operating as far from possible from any constraints that bound and set constraints on the operation of the process 102. In examples, the process controller (PC) 104 attempts to push the process 102 to operate nearer to the constraints that bound and set constraints on the operation of the process 102 so that the process 102 can operate in a more optimized way. In examples, the process controller (PC) 104 is configured to push the process 102 to operate nearer to the constraints that bound and set constraints on the operation of the process 102 by increasing throughput of the process 102, increasing yield of the process 102, minimizing energy consumption of the process 102, increasing efficiency of the process 102, increasing quality of the output of the process 102, and/or being optimized in other ways, such as economically. In examples, operating the process 102 in the more optimized way pushes the operation of the process 102 closer to, without crossing, the constraints that bound and set constraints on the operation of the process 102. In examples, the process controller (PC) 104 is configured to mathematically model the process 102 based on the manipulated variables (MVs) 110 and the control variables (CVs) 112. In examples, the mathematical models generated by the process controller (PC) 104 include the constraints that bound and set constraints on the operation of the process 102. In examples, the process controller (PC) 104 is configured to use an optimization objective function to allow users to manipulate optimization coefficients to push the operation of the process 102 in certain directions depending on current Key Performance Indicators (KPI).

In examples, the control modeler (CM) 106 (and any additional control modeler (CM) 104) is implemented using physical structures and/or programmed functionality using computer programable-circuitry and/or at least one computer-programable processor configured to implement all or part of the functionality described herein. In examples, the control modeler (CM) 106 (and any additional control modeler (CM) 106) is implemented as an instantiation of the computing system(s) 400 described herein. In examples, the control modeler (CM) 106 is configured to improve the control of the process 102 being performed by the process controller (PC) 104 itself because the process 102 changes over time for various reasons, such as based on wear and tear on equipment (such as physical valves designed to open and close), catalyst degradation over time, fee composition change (such as when the value of the product of the process increases or decreases or when a fee structure for extraction, refining, manufacture, etc. increases or decreases), etc. such that the models used in the process controller (PC) 104 change over time. In examples, modifications to the operation of the process 102 are implemented in part using the control modeler (CM) 106. In examples, the modifications to the operation of the process 102 are implemented in part by the control modeler (CM) 106 being configured to adjust set point values within the set point circuitry(s) 108 to inject or excite the manipulated variables (MVs) 110, which then effects the control variables (CVs) 112 of the process 102. In examples, the control modeler (CM) 106 is automated to require minimal user input to improve the quality of the models and thereby improve the control of the process 102.

In examples, the set point circuitry(s) 108 may include at least one Single-Input Single-Output (SISO) control loop. In examples, at least one Single-Input Single-Output (SISO) control loop within at least one set point circuitry 108 is configured to determine a flow indication of properties of the flow of a substance (such as oil, gasoline, diesel fuel, natural gas, water, oxygen, gases, a liquid, a solid, a slurry, etc.). In examples, the at least one Single-Input Single-Output (SIS) control loop) is configured to manipulate the flow of the substance (such as oil, gasoline, diesel fuel, natural gas, water, oxygen, gases, a liquid, a solid, a slurry, etc.) by (1) adjusting a valve position; and/or (2) changing a speed of a pump (such as increasing the speed of the pump to increase flow); etc. In examples, once the flow of the substance reaches a specific set point (SP), the at least one Single-Input Single-Output (SIS) control loop) is configured to (1) stop moving or re-adjust the value (such as by closing the valve); or (2) stop operating or re-adjust the speed of the variable speed pump (such as by stopping the variable speed pump or lowering the speed of the variable speed pump to decrease flow). In examples, while set points can be manually derived, the control modeler (CM) 106 is configured to automatically determine set points based on the mathematical models. In examples, the control modeler (CM) 106 is configured to adjust the set points using the set point circuitry(s) 108 to achieve specific targets for the process 102. In examples, the control modeler (CM) 106 is multi-variable, meaning it can analyze a number of variables (such as flows, temperatures, pressures, etc.) and then manipulate the entire process 102 (which may include an entire section of a plant or an entire plant) to push the variables (such as the control variables (CVs) 112 and/or the manipulated variables (MVs) 110) into the optimum position. In examples, the control modeler (CM) 106 changes models over time if the models that are currently running the process become less relevant. In examples, feedback of the manipulated variables (MVs) 110 and the control variables (CVs) 112 for the process 102 is provided to the control modeler (CM) 106 to remodel the process 102. In examples, re-modeling of the process 102 in the control modeler (CM) 106 includes re-modeling the relationships between the manipulated variables (MVs) 110 and the control variables (CVs) 112 so that the control modeler (CM) 106 can adapt the process 102 to the current operating range and/or current operating functionalities.

In examples, the process controller (PC) 104 writes to set points (SP) within the set point circuitry(s) 108. In examples, the set point circuitry(s) 108 include proportional-integral-derivative (PID) loops housed within a distributed control system (DCS) or programable logic controller (PLC) and the set point values are written to the PID loops housed within the DCS or PLC as the layer of control just above a base layer control (BLC) of a process unit of the process 102. In examples, transmitters within the system 100 measures things like flow, temperature, and/or pressure from the process. In examples, analyzers within the system 100 indicate quality. In examples, the transmitters and analyzers within the system 100 are wired into a control system with a number of inputs.

In examples, the process controller (PC) 104 and/or the control modeler (CM) 106 are implemented using separate computing systems (such as separate servers and/or computers implemented as separate computing systems 400 as described herein). In examples, the process controller (PC) 104 and/or the control modeler (CM) 106 are implemented using a single computing system (such as a single server and/or computer implemented as a single computing system 400 as described herein). In examples, the process controller (PC) 104 is implemented within a distributed control system (DCS).

In examples, there are two types of control variables (CVs) (such as any of control variables (CVs) 112): (1) self-regulating control variables (CVs); and (2) integrating control variables (CVs). In examples, self-regulating control variables (CVs) naturally settle at a steady state after a disturbance, while integrating control variables (CVs) exhibit a continuous drift in response to a sustained change, never settling at a new steady state on their own. In examples, self-regulating control variables (CVs) may include flow, temperature, and/or pressure, etc. In examples, it is desirable to maintain self-regulating control variables (CVs) within a certain range. In examples, a self-regulating control variable (CV) starts at a point, goes through a process, and then settles at equilibrium. In examples, self-regulating control variables (CVs) reach equilibrium after a certain point, such that they do not move anymore unless there are new disturbances or updates in manipulated variable(s) (MV) (such as manipulated variable MV 110).

In examples, a gain adaptive algorithm enables better control variable (CV) constraint management with self-regulating control variables. In examples where a manipulated variable (MV) 110 has a positive relationship with a control variable (CV) 112 and the previous manipulated variable (MV) 110 excitation is a step-up, at the next switching interval, the control variable (CV) 112 may be at or close to its low limit because of some disturbances. In examples, the control modeler (CM) 106 manually pulls the manipulated variables (MVs) (inputs) to a step change. In examples, updates to a self-regulating control variable (CV) 112 in the control modeler (CM) 106 can capture the overall process dynamics for the process 102. In examples, if a manipulated variable (MV) 110 is pulled up, the corresponding control variable (CV) 112 may undesirably cross constraints (such as user entered limits) on the process 102. In examples, a step-down manipulated variable (MV) 110 excitation causes a further control variable (CV) 112 constraints violation. In examples, the step change of the manipulated variable (MV) 110 should not be used if the corresponding control variable (CV) 112 is exceeding the defined control limit for the particular manipulated variable (MV) step change. In examples, self-regulating control variables (CVs) (such as control variable (CV) 112 of flow, pressure, temperature, etc.), automatically modify themselves to do the opposite step change. In examples, the process dynamics are still captured without violating the control variable (CV) 112 constraints (such as user entered limits) on the process 102. In examples, it may be more operationally friendly to move the manipulated variable (MV) 110 up again instead of moving the manipulated variable (MV) 110 down as scheduled.

In examples, integrating control variables (CVs) include control variables that do not stay at equilibrium. In examples, integrating control variables (CVs) may include (among other things): (1) tank level control, where a liquid level continuously changes based on the net inflow and outflow; (2) cumulative flow control, where the total flow accumulated over time needs to be managed; and/or (3) pressure control in large vessels, where the pressure does not naturally settle and requires continuous adjustment. In examples, an integrating control variable (CV) is a tank level that continuously increases until a point where it reaches a high limit and depletes and then fills up again, never reaching an equilibrium. In examples, these integrating control variables (CVs) (such as any of control variables (CVs) 112) are handled differently by the control modeler (CM) 106 than self-regulating control variable (CV) 112.

In examples, some gain adaptive algorithms for the control modeler (CM) 106 are limited because they are only optimized for self-regulating control variables (CVs) 112, but not for integrating control variables (CVs) 112. In examples optimized only for self-regulating control variables (CVs), the manipulated variables (MVs) 110 move in a one step up and one step down pattern alternating between a low state and a high state. In examples optimized only for self-regulating control variables (CVs), the gain adaptive algorithm is not applicable to the integrating control variables (CVs) 112 because the integrating control variables (CVs) 112 would exceed the control limits (the high limit or low limit predictions) if the manipulated variables (MVs) 110 moved in the one step up and one step down pattern alternating between a low state and a high state. In examples optimized only for self-regulating control variables (CVs), the inapplicability of the gain adaptive algorithm to the integrating control variables (CVs) resulted in compromised model quality coming out of the control modeler (CM) 106 and the control modeler (CM) is not robust in these cases because one type of control variables (CVs) 112 was handled in a particular way and another type of control variables (CVs) 112 was handled in a different way which caused imbalance in the models. In examples, this results in the models sometimes being inaccurate, which is a limitation in the control modeler (CM) 106 when handling integrating control variables (CVs) 112.

In examples, the integrating nature of the integrating control variables (CVs) 112 means that the response to control actions is fundamentally different from that of self-regulating control variables (CVs) 112. In examples, applying the same Gain Adaptive algorithm designed for self-regulating control variables (CVs) 112 to integrating control variables (CVs) 112 leads to inaccuracies and inefficiencies. In examples, the self-regulating algorithm assumes that the control variables (CVs) 112 will reach a new equilibrium, which is not the case with integrating control variables (CVs) 112. In examples, this can result in suboptimal model identification, longer commissioning times, and increased likelihood of constraint violations. Due to the differences in integrating control variables (CVs) 112 from self-regulating control variables (CVs) 112, an alternative approach can more effectively handle integrating control variables (CVs) 112. In examples, integrating control variables (CVs) 112 can implement a Gain Adaptive Stepping algorithm specifically tailored to their continuous and cumulative nature to lead to more precise control and model accuracy.

In examples, a Rate of Change (ROC) control theory algorithm is used within the process controller (PC) 104 to control the integrating control variables (CVs) 112. In examples, a Rate of Change (ROC) control theory and corresponding control variables (CVs) 112 are calculated in the process controller (PC) 104. In examples, the Rate of Change (ROC) method utilizes a control variable (CV) transformation to convert integrator values into their derivative values, essentially transforming integrating control variables (CVs) 112 values and models into self-regulating Rate of Change (ROC)/derivative values and models. In examples, this transformation acts as a proxy-instead of directly controlling the values of the integrating control variables (CVs) 112 themselves, the derivative is taken (which is essentially the rate of change of the integrator values) and the integrating control variables (CVs) 112 are controlled, which acts as a proxy for self-regulating values. In examples, the tank level is continuously increasing, but the rate of change of the tank value would be a stable value. In examples, the stable values are used as a proxy control of the rate of change of the integrating control variables (CVs) 112 values instead of a direct control of the integrating control variables (CVs) 112 values. In examples, this transformation essentially translates the integrating control variables (CVs) 112 into self-regulating control variables (CVs) 112 on the back end. In examples, only specific control variables (CVs) 112 are used in the gain adaptive stepping algorithm, such as the control variables (CVs) 112 with a key relationship with the manipulated variables (MVs) 110 and a current model rank better than 3; or the control variables (CVs) 112 with a locked model relationship with the manipulated variables (CVs) 110. In examples, the system 100 has some control variables (CVs) 112 operating using the Rate of Change (ROC) and others operating without Rate of Change (ROC) on other control variables (CVs) 112.

In examples, the following parameters are used as inputs for read value, high limit, and low limit from the process controller (PC) 104 into the control modeler (CM) 106 to achieve gain adaptive stepping for integrators:

    1. **Read Value:** Rate of Change (ROC) Present Value (PV)

    2. **High Limit:** Rate of Change (ROC) high limit

    3. **Low Limit:** Rate of Change (ROC) low limit.

In examples, the Rate of Change (ROC) limits are calculated according to the position of the integrator in relation to the integrator limits.

In examples, the control modeler (CM) 106 includes the gain adaptive stepping algorithm to check to see whether a control variable (CV) is violating a particular user entered limit when the manipulated variables (MVs) are stepped. In examples, the gain adaptive stepping algorithm is applied to the integrating control variables (CVs) in addition to the self-regulating control variables (CVs). In examples, feedback from the process 102 relating to the control variables (CVs) is provided from the process 102 to the control modeler (CM) 106. In examples, the data received from the process control variables (CVs) and manipulated variables (MVs) are the same for the control modeler (CM) 106 for the integrating control variables (CVs) (which do not reach an equilibrium) and the self-regulating control variables (CVs) (which reach an equilibrium). In examples, because integrating control variables (CVs) do not reach equilibrium, the same gain adaptive stepping algorithm that can be used with self-regulating control variables (CVs) is not applicable to the integrating control variables (CVs) that are continuously varying. In examples, when the same gain adaptive stepping algorithm was used with the integrating control variables (CVs) that are continuously varying, the step changes were applied even though the integrator was predicted to cross a particular limit after the manipulated variable (MV) was stepped.

In examples, a different type of gain adaptive algorithm using the Rate of Change (ROC) information is used for the gain adaptive algorithm for the integrating control variables (CVs) to simplify the calculations. In examples, taking the rate of change of an integrating control variable (CV) acts as a self-regulating proxy for the integrating control variable (CV). In examples, integrating the Rate of Change (ROC) information into the gain adaptive algorithm in the control modeler (CM) 106 enables a more robust control modeler (CM) which can perform a gain adaptive algorithm on integrating control variables (CVs). In examples, using the control modeler (CM) 106 enables less control action to be taken through the process controller (PC) 104 which results in better excitation of the process 102, thereby leading to a higher quality process. In examples, the process 102 using the gain adaptive algorithm is excited enough to result in good system identification without moving outside of the envelope of normal operation.

In examples, these Rate of Change (ROC) variables (Rate of Change (ROC) present value, Rate of Change (ROC) high limit, and Rate of Change (ROC) low limit) are imported back from the process controller (PC) 104 as Rate of Change (ROC) feedback and provided back to the control modeler (CM) 106. In examples, the adaptive stepping algorithm is applied to the integrators in the back end. In examples where the same gain adaptive algorithm that is available for the self-regulating models for integrators is used, this methodology may not be as useful because the modeler assumes this particular control variables (CV) will be reaching a stable equilibrium after a while, while stepping the self-regulators. In examples, this is the reason the same algorithm cannot be used for integrators. Ine xamples, it is more difficult to make a decision whether to move or make a move in the other direction for integrating control variables (CVs) than it is for self-regulating control variables (CVs).

In examples, the Rate of Change (ROC) information (including Rate of Change (ROC) Present Value (PV), Rate of Change (ROC) high limit, and Rate of Change (ROC) low limit) allow the decisions to become easier because the rate of change is a more stable response than the integrating control variables (CVs). In examples, since these values are available (Rate of Change (ROC) PV, Rate of Change (ROC) high limit, and Rate of Change (ROC) low limit), from the process controller (PC) (which is sort of a proxy model which is converted into a self-regulating control variable (CV), the corresponding parameters which are used for that), the proxy values obtained from the Rate of Change (ROC) are used in the control modeler (CM) 106 to apply this gain adaptive stepping algorithm to step more sensibly so that if the integrating control variable (CV) is crossing a particular constraint (limit), then it is identified by these calculated limits. In examples, if the integrating control variable (CV) is not crossing a particular constraint (limit), then the system operates per the schedule. In examples, the control modeler (CM) 106 checks for constraint violations for integrating control variables (CVs) coming from the process controller (PC) 104 and/or the control modeler (CM) 106.

In examples, manipulated variables (MVs) and control variables (CVs) in the control modeler (CM) 106 are different after applying the gain adaptive stepping for integrating control variables (CVs). In examples, when an integrator crosses limits, such that manipulated variables (MVs) are stepped accordingly, by using the gain adaptive stepping for integrating control variables (CVs), it does not follow a definitive pattern irrespective of the control variables (CV) crossing the constraints/limits. In examples, when an integrator is kept within limits, it looks similar to a self-regulating control variables (CV) (which is very stable). In examples, were the gain adaptive stepping algorithm not applied, the integrating control variable (CVs) would follow the same pattern irrespective of whatever the integrator value is. In examples, the gain adaptive algorithm is triggered and determines whether it should move up or down. In examples, this does not result in a particular pattern, but rather the pattern is decided based on the integrating control variables (CVs) position and whether it would violate the constraints.

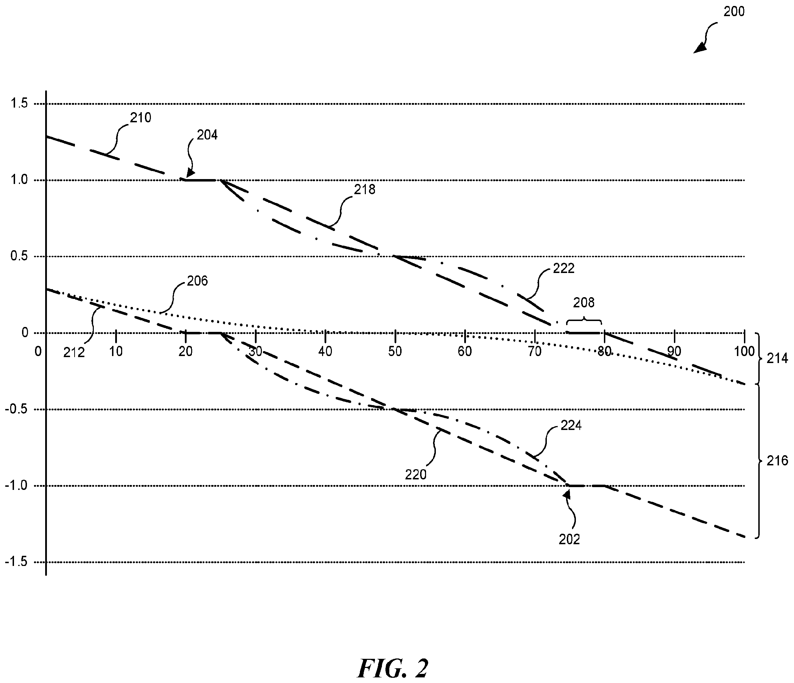

Figure 2 shows a chart 200 showing an example relationship between an integrator value and an integrator rate of change limit. In the chart 200 of Figure 2, the X-axis shows the integrator value increasing from the left side to the right and the Y-axis shows the integrator rate of change limit increasing from negative values at the bottom to positive values at the top. In the example shown in the chart 200 of Figure 2, the Rate of Change (ROC) calculation results within three distinct regions of the integrator's range, namely outside limits (outside the integrator high limit 202 and the integrator low limit 204), inside limits (inside the integrator high limit 202 and the integrator low limit 204), and approaching limits (approaching the integrator high limit 202 and the integrator low limit 204). In examples, there are a few methods where the integrator high limit 202 and the integrator low limit 204 are calculated. In examples, the Read Value is the derivative of the integrator value and is calculated directly. In examples, the integrator high limit 202 and the integrator low limit 204 can be calculated based on the position of the integrator relative to the position of the Rate of Change (ROC) portion of the integrator.

In the example shown in chart 200 of Figure 2, if the integrator value is completely outside of the limits (such as integrator high limit 202 and integrator low limit 204), then certain parameters (like the Rate of Change (ROC) Limit Bias 206) can be used to bring the integrator value back into control. In examples, if the integrator value is within limits (such as integrator high limit 202 and integrator low limit 204), the dead band 208 is used to try to hover in-between the limits (the integrator high limit 202 and the integrator low limit 204) themselves. In examples, if the integrator value is within limits (the integrator high limit 202 and the integrator low limit 204), there is a different formula to calculate the integrator high limit 202 and the integrator low limit 204. In examples, once the Present Value (PV) (the translated integrator Read Value) is known, the Rate of Change (ROC) high limit 210 and the Rate of Change (ROC) low limit 212 are calculated based on these conditions. In examples, these calculated limits (Rate of Change (ROC) high limit 210 and Rate of Change (ROC) low limit 212) are used to further control the process by controlling the particular control variable (CV). In examples, this is how the integrating control variable (CV) is translated into a self-regulating control variable (CV) using these three parameters and some tuning factors.

In examples, the integrator is outside of the limits (integrator high limit 202 and integrator low limit 204). In examples where the integrator value is above the integrator low limit 204 (shown on the left side of Figure 2), the recovery Rate of Change (ROC) 214 is implemented to force the integrator to return to its limits using the following equations:

1. Rate of Change (ROC) high limit = - Recovery Rate of Change (ROC)

2.

Rate of Change (ROC) low limit = - Recovery Rate of Change (ROC) - Rate of Change (ROC) Range - Rate of Change (ROC) Limit Bias

In examples where the integrator Present Value (PV) is less than the low limit then the relevant equations are:

1. Rate of Change (ROC) low limit = Recovery Rate of Change (ROC)

2.

Rate of Change (ROC) high limit = + Recovery Rate of Change (ROC) + Rate of Change (ROC) Range + Rate of Change (ROC) Limit Bias.

In examples, the integrator is near the limits (integrator high limit 202 and integrator low limit 204). In examples when the integrator value is within the configured dead band 208 from the integrator high limit 202 as shown in chart 200 of Figure 2, it is not allowed to have a positive rate of change as that will cause the integrator to violate its limits such that the Rate of Change (ROC) high limit 210 is set to 0 and the Rate of Change (ROC) low limit 212 is set to the Rate of Change (ROC) range 216. In examples, when the integrator is within the dead band 208 from the integrator low limit 204, it is not allowed to have a negative rate of change and the Rate of Change (ROC) low limit 212 is set to 0 and the Rate of Change (ROC) high limit 210 is set to the Rate of Change (ROC) range 216.

In examples, the integrator is within the limits (integrator high limit 202 and integrator low limit 204). In examples when the integrator value is between limits + the dead band 208 (as shown in the middle of Figure 2), then the Rate of Change (ROC) limits (Rate of Change (ROC) high limit 210 and Rate of Change (ROC) low limit 212) are adjusted based on how far the integrator Present Value (PV) is from its limits. In examples, the Rate of Change (ROC) limits are adjusted as an exponential function of the integrator Present Value (PV) relative to its limits. In examples, Buffering Factor(s) greater than one will allow the controller to be less aggressive as the Rate of Change (ROC) limits (Rate of Change (ROC) high limit 210 and Rate of Change (ROC) low limit 212) will only start to move towards the extremes when the integrator Present Value (PV) approaches its limits. In examples where the Buffering Factor(s) is less than one, the controller will be more aggressive. Figure 2 shows examples of how the Rate of Change (ROC) limits are calculated for different Buffering Factor(s), such as for Rate of Change (ROC) high limit 218 and Rate of Change (ROC) low limit 220 when using a buffering factor of 1 and Rate of Change (ROC) high limit 222 and Rate of Change (ROC) low limit 224 when using a buffering factor of 2.

In examples, by using Rate of Change (ROC) variables imported from the process controller (PC) 104, which are essentially self-regulating variables, constraint violations on integrating control variables (CVs) can be checked and directions to the gain adaptive stepping algorithm can be provided, allowing the gain adaptive algorithm for integrating control variables (CVs). In examples, the ability to use the gain adaptive algorithm with the integrating control variables (CVs) is integrated with the existing control modeler (CM) 106, requiring no additional effort from the user. In examples, the gain adaptive stepping algorithm is adapted for integrating control variables (CVs) to make the control modeler (CM) 106 more versatile and user-friendly which removes the limitations associated with inaccurate modeling and control of integrating control variables (CVs), leading to more reliable and efficient control strategies.

In examples, this innovation addresses existing limitations and enhances the robustness and overall functionality of the control modeler (CM) 106. In examples, by improving the modeling of integrating control variables (CVs), the process models are more accurate, commissioning times are reduced, and operational risks are minimized. In examples, the overall capability of the control modeler (CM) 106 is enhanced as it can now handle both self-regulating and integrating control variables (CVs) with equal proficiency, which results in better control performance, reduced maintenance efforts for updating models, and a more robust control system (such as system 100). In examples with accurate models, the need for frequent recalibration and manual adjustments is minimized, leading to lower operational costs and increased productivity.

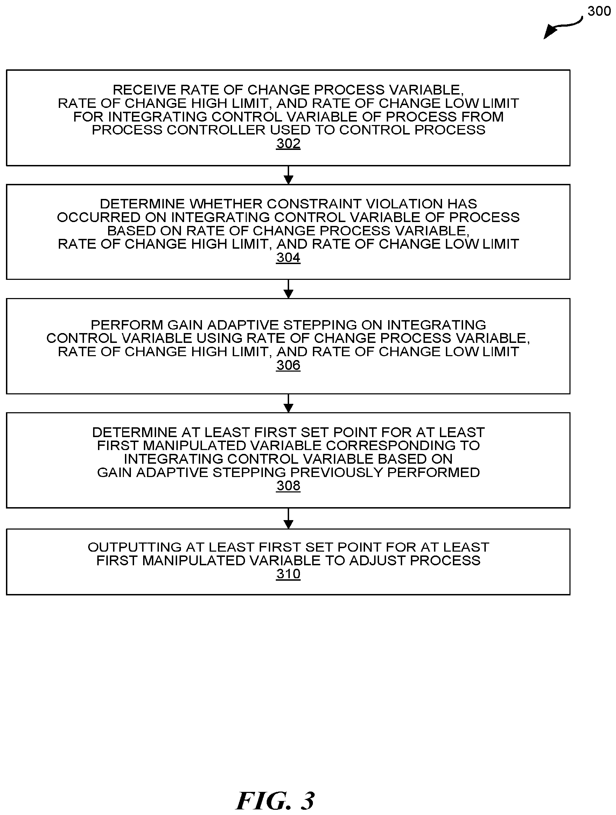

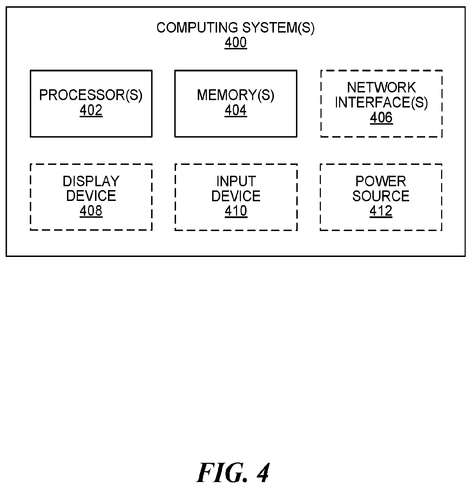

Figure 3 is an example method 300 for gain adaptive stepping for integrating control variables. In examples, the example method 300 is executed using any of system 100 and computing system(s) 400 described herein. In examples, the example method 300 is embodied, at least in part, in a set of instructions on a non-transitory computer-readable medium including instructions, that when executed by at least one processor, cause the at least one processor to perform the functionality described in example method 300. In examples, the non-transitory computer-readable medium can be any device, mechanism, or populated data structure used for storing information. In examples, the non-transitory computer-readable medium can be or include any type of volatile memory, nonvolatile memory, and/or dynamic memory, random access memory, memory storage devices, optical memory devices, magnetic media, floppy disks, magnetic tapes, hard drives, erasable programmable read-only memories (EPROMs), electrically erasable programmable read-only memories (EEPROMs), optical media (such as compact discs, DVDs, Blu-ray Discs), disc drives, flash drives, and/or the like. In examples, the at least one processor executing the instructions on the non-transitory computer-readable medium can be any known processor, such as a general purpose processor (GPP) or special purpose (such as a field-programmable gate array (FPGA), application-specific integrated circuit (ASIC) or other integrated circuit or circuitry), any programmable logic device, or any circuitry. In examples, the non-transitory computer-readable medium is implemented by the at least one memory 404 and the at least one processor is implemented by the at least one processor 402 shown in Figure 4 and described below.

In examples, the integrating control variable is any of a tank level, a cumulative flow, and/or a pressure control. In examples, the integrating control variable is a tank level control where a liquid level continuously changes based on net inflow and outflow. In examples, the integrating control variable is a tank level that continuously increases until a point where it reaches a high limit and depletes and then fills up again, never reaching an equilibrium. In examples, the integrating control variable is cumulative flow control where the total flow accumulated over time needs to be managed. In examples, the integrating control variable is a cumulative flow control where the total flow accumulated over time needs to be managed. In examples, the integrating control variable is a pressure control in large vessels where the pressure does not naturally settle and requires continuous adjustment.

In examples, method 300 begins at block 302 with receiving a rate of change process variable, a rate of change high limit, and a rate of change low limit for an integrating control variable of a process from a process controller (such as process controller (PC) 104 shown in Figure 1 and described above) used to control the process (such as process 102 shown in Figure 1 and described above). In examples, the rate of change process variable, the rate of change high limit, and the rate of change low limit for the integrating control variable of the process is received at a control modeler (such as control modeler (CM) 106 shown in Figure 1 and described above) from the process controller (such as process controller (PC) 104 shown in Figure 1 and described above) used to control the process (such as process 102 shown in Figure 1 and described above). In examples, the rate of change process variable, the rate of change high limit, and the rate of change low limit for the integrating control variable of the process are received from the process controller (such as process controller (PC) 104 shown in Figure 1 and described above) used to control the process (such as process 102 shown in Figure 1 and described above) via at least one network interface (such as network interface(s) 406 shown in Figure 4 and described below).

In examples, method 300 proceeds to block 304 with determining whether a constraint violation has occurred on an integrating control variable of a process based on a rate of change process variable, a rate of change high limit, and a rate of change low limit. In examples, method 300 proceeds to block 306 with performing gain adaptive stepping on the integrating control variable using the rate of change process variable, the rate of change high limit, and the rate of change low limit.

In examples, method 300 proceeds to block 308 with determining at least a first set point for at least a first manipulated variable (MV) corresponding to the integrating control variable based on the gain adaptive stepping previously performed. In examples, the at least the first set point comprises a plurality of set points. In examples, the at least the first manipulated variable (MV) (such as MV 110 shown in Figure 1 and described above) comprises a plurality of manipulated variables (MVs) (such as a plurality of MVs 110 including MV 110-1 and any quantity of MC 110-2 through MC 110-M shown in Figure 1 and described above).

In examples, method 300 proceeds to block 310 with outputting the at least the first set point for at least the first manipulated variable (MV) to adjust the process. In examples, outputting the at least the first set point for the at least the first manipulated variable (MV) to adjust the process includes outputting the at least the first set point for the at least one manipulated variable (MV) to the process controller. In examples, outputting the at least the first set point for the at least the first manipulated variable (MV) to adjust the process includes outputting the at least the first set point for the at least one manipulated variable (MV) to at least a first set point circuitry.

In examples, method 300 also includes performing gain adaptive stepping on a self-regulating control variable of the process; determining at least a second set point for at least a second manipulated variable (MV) corresponding to the self-regulating control variable; and outputting the at least the second set point for the at least the first manipulated variable (MV) corresponding to the self-regulating control variable.

Figure 4 is a block diagram illustrating example computing system(s) 400. The computing system(s) 400 includes at least one processor 402, at least one memory 404, optional at least one network interface 406, optional at least one display device 408, optional at least one input device 410, and optional at least one power source 412. In examples, any of the functionality disclosed herein may be implemented (at least in part) by the at least one processor 402 and the at least one memory 404. In examples, any of the process 102, process controller (PC) 104, control modeler (CM) 106, and/or set point circuitry 108 can be implemented (at least in part) using the computing system(s) 400.

The at least one processor 402 can be any known processor, such as a general purpose processor (GPP) or special purpose (such as a field-programmable gate array (FPGA), application-specific integrated circuit (ASIC) or other integrated circuit or circuitry), any programmable logic device, or any circuitry. In examples, the at least one memory 404 can be any device, mechanism, or populated data structure used for storing information. In examples, the at least one memory 404 can be or include any type of volatile memory, nonvolatile memory, and/or dynamic memory. In examples, the at least one memory 404 can be random access memory, memory storage devices, optical memory devices, magnetic media, floppy disks, magnetic tapes, hard drives, erasable programmable read-only memories (EPROMs), electrically erasable programmable read-only memories (EEPROMs), optical media (such as compact discs, DVDs, Blu-ray Discs) and/or the like. In accordance with some embodiments, the at least one memory 404 may include one or more disk drives, flash drives, one or more databases, one or more tables, one or more files, local cache memories, processor cache memories, relational databases, flat databases, and/or the like. In addition, those of ordinary skill in the art will appreciate many additional devices and techniques for storing information, which can be used as the at least one memory 404. The at least one memory 404 may be used to store instructions for running one or more applications or modules on the at least one processor 402. In examples, the at least one memory 404 could be used in one or more examples to house all or some of the instructions needed to execute the functionality discussed herein.

In examples, the optional at least one network interface 406 includes or is coupled to optional at least one antenna for communication with a network. In examples, the optional at least one network interface 406 includes at least one of an Ethernet interface, a cellular radio access technology (RAT) radio, a Wi-Fi radio, a Bluetooth radio, or a near field communication (NFC) radio. In examples, the optional at least one network interface 406 includes a cellular radio access technology radio configured to establish a cellular data connection (mobile Internet) of sufficient speeds with a remote server using a local area network (LAN) or a wide area network (WAN). In examples, the cellular radio access technology includes at least one of Personal Communication Services (PCS), Specialized Mobile Radio (SMR) services, Enhanced Special Mobile Radio (ESMR) services, Advanced Wireless Services (AWS), Code Division Multiple Access (CDMA), Global System for Mobile Communications (GSM) services, Wideband Code Division Multiple Access (W-CDMA), Universal Mobile Telecommunications System (UMTS), Worldwide Interoperability for Microwave Access (WiMAX), 3rd Generation Partnership Projects (3GPP) Long Term Evolution (LTE), High Speed Packet Access (HSPA), third generation (3G) fourth generation (4G), fifth generation (5G), etc. or other appropriate communication services or a combination thereof. In examples, the optional at least one network interface 406 includes a Wi-Fi (IEEE 802.11) radio configured to communicate with a wireless local area network that communicates with the remote server, rather than a wide area network. In examples, the optional at least one network interface 406 includes a near field radio communication device that is limited to close proximity communication, such as a passive near field communication (NFC) tag, an active near field communication (NFC) tag, a passive radio frequency identification (RFID) tag, an active radio frequency identification (RFID) tag, a proximity card, or other personal area network device.

In examples, the optional at least one display device 408 includes at least one of a light emitting diode (LED), a liquid crystal display (LCD), a light emitting diode (LED) display, an organic light emitting diode (OLED) display, an e-ink display, a field emission display (FED), a surface-conduction electron-emitter display (SED), or a plasma display. In examples, the optional at least one input device 410 includes at least one of a touchscreen (including capacitive and resistive touchscreens), a touchpad, a capacitive button, a mechanical button, a switch, a dial, a keyboard, a mouse, a camera, a biometric sensor/scanner, a microphone, etc. In examples, the optional at least one display device 408 is combined with the optional at least one input device 410 into a human machine interface (HMI) for user interaction with the computing system(s) 400. In examples, optional at least one power source 412 is used to provide power to the various components of the computing system(s) 400.

The methods and techniques described herein may be implemented in digital electronic circuitry, or with a programmable processor (for example, a special-purpose processor or a general-purpose processor such as a computer) firmware, software, or in various combinations of each. Apparatus embodying these techniques may include appropriate input and output devices, a programmable processor, and a storage medium tangibly embodying program instructions for execution by the programmable processor. A process embodying these techniques may be performed by a programmable processor executing a program of instructions to perform desired functions by operating on input data and generating appropriate output. The techniques may advantageously be implemented in one or more programs that are executable on a programmable system including at least one programmable processor coupled to receive data and instructions from, and to transmit data and instruction to, a data storage system, at least one input device, and at least one output device. Generally, a processor will receive instructions and data from a read-only memory and/or a random-access memory. Storage devices suitable for tangibly embodying computer program instructions and data include all forms of non-volatile memory and storage media, including by way of example random access memory, memory storage devices, optical memory devices, magnetic media, floppy disks, magnetic tapes, hard drives, erasable programmable read-only memories (EPROMs), electrically erasable programmable read-only memories (EEPROMs), optical media (such as compact discs, DVDs, Blu-ray Discs), magneto-optical disks, and/or the like. Any of the foregoing may be supplemented by, or incorporated in, any known processor, such as a general purpose processor (GPP) or special purpose (such as a field-programmable gate array (FPGA), application-specific integrated circuit (ASIC) or other integrated circuit or circuitry), or any programmable logic device.

The components described above are meant to exemplify some types of possibilities. In no way should the aforementioned examples limit the disclosure, as they are only exemplary embodiments. The embodiments, structure, methods, etc. described herein, including those below and above, can be combined together in various ways.

## Terminology

Brief definitions of terms, abbreviations, and phrases used throughout this application are given below.

The terms "connected", "coupled", and "communicatively coupled" and related terms are used in an operational sense and are not necessarily limited to a direct physical connection or coupling. Thus, for example, two devices may be coupled directly, or via one or more intermediary media or devices. As another example, devices may be coupled in such a way that information can be passed there between, while not sharing any physical connection with one another. Based on the disclosure provided herein, one of ordinary skill in the art will appreciate a variety of ways in which connection or coupling exists in accordance with the aforementioned definition.

The phrase "based on" does not mean "based only on," unless expressly specified otherwise. In other words, the phrase "based on" describes both "based only on" and "based at least on". Additionally, the term "and/or" means "and" or "or". For example, "A and/or B" can mean "A", "B", or "A and B". Additionally, "A, B, and/or C" can mean "A alone," "B alone," "C alone," "A and B," "A and C," "B and C" or "A, B, and C."

The phrases "in exemplary embodiments", "in example embodiments", "in some embodiments", "according to some embodiments", "in the embodiments shown", "in other embodiments", "embodiments", "in examples", "examples", "in some examples", "some examples" and the like generally mean the particular feature, structure, or characteristic following the phrase is included in at least one embodiment of the present disclosure, and may be included in more than one embodiment of the present disclosure. In addition, such phrases do not necessarily refer to the same embodiments or different embodiments.

If the specification states a component or feature "may," "can," "could," or "might" be included or have a characteristic, that particular component or feature is not required to be included or have the characteristic.

The term "responsive" includes completely or partially responsive.

The term "module" refers broadly to a software, hardware, or firmware (or any combination thereof) component. Modules are typically functional components that can generate useful data or other output using specified input(s). A module may or may not be self-contained. An application program (also called an "application") may include one or more modules, or a module can include one or more application programs.

The term "network" generally refers to a group of interconnected devices capable of exchanging information. A network may be as few as several personal computers on a Local Area Network (LAN) or as large as the Internet, a worldwide network of computers. As used herein, "network" is intended to encompass any network capable of transmitting information from one entity to another. In some cases, a network may be comprised of multiple networks, even multiple heterogeneous networks, such as one or more border networks, voice networks, broadband networks, financial networks, service provider networks, Internet Service Provider (ISP) networks, and/or Public Switched Telephone Networks (PSTNs), interconnected via gateways operable to facilitate communications between and among the various networks.

Also, for the sake of illustration, various embodiments of the present disclosure have herein been described in the context of computer programs, physical components, and logical interactions within modern computer networks. Importantly, while these embodiments describe various embodiments of the present disclosure in relation to modern computer networks and programs, the method and apparatus described herein are equally applicable to other systems, devices, and networks as one skilled in the art will appreciate. As such, the illustrated applications of the embodiments of the present disclosure are not meant to be limiting, but instead are examples. Other systems, devices, and networks to which embodiments of the present disclosure are applicable include, for example, other types of communication and computer devices and systems. More specifically, embodiments are applicable to communication systems, services, and devices such as cell phone networks and compatible devices. In addition, embodiments are applicable to all levels of computing from the personal computer to large network mainframes and servers.

While detailed descriptions of one or more embodiments of the disclosure have been given above, various alternatives, modifications, and equivalents will be apparent to those skilled in the art without varying from the spirit of the disclosure. For example, while the embodiments described above refer to particular features, the scope of this disclosure also includes embodiments having different combinations of features and embodiments that do not include all of the described features. Accordingly, the scope of the present disclosure is intended to embrace all such alternatives, modifications, and variations as fall within the scope of the claims, together with all equivalents thereof. Therefore, the above description should not be taken as limiting.

Examples

Example 1 includes a system, comprising: at least one processor; and at least one memory communicatively coupled to the at least one processor, the at least one memory storing computer readable instructions that when executed by the at least one processor causes the at least one processor to: receive a rate of change process variable, a rate of change high limit, and a rate of change low limit for an integrating control variable of a process from a process controller used to control the process; determine whether a constraint violation has occurred on the integrating control variable of the process based on the rate of change process variable, the rate of change high limit, and the rate of change low limit; perform gain adaptive stepping on the integrating control variable using the rate of change process variable, the rate of change high limit, and the rate of change low limit; determine at least a first set point for at least a first manipulated variable corresponding to the integrating control variable based on the gain adaptive stepping previously performed; and output the at least the first set point for the at least the first manipulated variable to adjust the process.

Example 2 includes the system of Example 1, wherein the computer readable instructions, when executed by the at least one processor, further causes the at least one processor to: perform gain adaptive stepping on a self-regulating control variable of the process; determine at least a second set point for at least a second manipulated variable corresponding to the self-regulating control variable; and outputting the at least the second set point for the at least the first manipulated variable corresponding to the self-regulating control variable.

Example 3 includes the system of any of Examples 1-2, wherein the computer readable instructions, when executed by the at least one processor, causes the at least one processor to: output the at least the first set point for the at least one manipulated variable to adjust the process at least in part by being configured to: output the at least the first set point for the at least one manipulated variable to the process controller.

Example 4 includes the system of any of Examples 1-3, wherein the computer readable instructions, when executed by the at least one processor, causes the at least one processor to: output the at least the first set point for the at least one manipulated variable to adjust the process at least in part by being configured to: output the at least the first set point for the at least one manipulated variable to at least a first set point circuitry.

Example 5 includes the system of any of Examples 1-4, further comprising: at least one network interface configured to: receive the rate of change process variable, the rate of change high limit, and the rate of change low limit for the integrating control variable of the process from the process controller used to control the process.

Example 6 includes the system of any of Examples 1-5, further comprising: wherein the at least the first set point comprises a plurality of set points; and wherein the at least the first manipulated variable comprises a plurality of manipulated variables.

Example 7 includes the system of any of Examples 1-6, wherein the integrating control variable is selected from: a tank level; a cumulative flow; or a pressure control.

Example 8 includes a method comprising: receiving a rate of change process variable, a rate of change high limit, and a rate of change low limit for an integrating control variable of a process from a process controller used to control the process; determining whether a constraint violation has occurred on the integrating control variable of the process based on the rate of change process variable, the rate of change high limit, and the rate of change low limit; performing gain adaptive stepping on the integrating control variable using the rate of change process variable, the rate of change high limit, and the rate of change low limit; determining at least a first set point for at least a first manipulated variable corresponding to the integrating control variable based on the gain adaptive stepping previously performed; and outputting the at least the first set point for the at least the first manipulated variable to adjust the process.

Example 9 includes the method of Example 8, further comprising: performing gain adaptive stepping on a self-regulating control variable of the process; determining at least a second set point for at least a second manipulated variable corresponding to the self-regulating control variable; and outputting the at least the second set point for the at least the first manipulated variable corresponding to the self-regulating control variable.

Example 10 includes the method of any of Examples 8-9, wherein outputting the at least the first set point for the at least the first manipulated variable to adjust the process includes: outputting the at least the first set point for the at least one manipulated variable to the process controller.

Example 11 includes the method of any of Examples 8-10, wherein outputting the at least the first set point for the at least the first manipulated variable to adjust the process includes: outputting the at least the first set point for the at least one manipulated variable to at least a first set point circuitry.

Example 12 includes the method of any of Examples 8-11, further comprising: receiving the rate of change process variable, the rate of change high limit, and the rate of change low limit for the integrating control variable of the process from the process controller used to control the process via at least one network interface.

Example 13 includes the method of any of Examples 8-12, further comprising: wherein the at least the first set point comprises a plurality of set points; and wherein the at least the first manipulated variable comprises a plurality of manipulated variables.

Example 14 includes the method of any of Examples 8-13, wherein the integrating control variable is selected from: a tank level; a cumulative flow; or a pressure control.

Example 15 includes a non-transitory computer-readable medium including a set of instructions that, when executed by at least one processor, cause the at least one processor to: receive a rate of change process variable, a rate of change high limit, and a rate of change low limit for an integrating control variable of a process from a process controller used to control the process; determine whether a constraint violation has occurred on the integrating control variable of the process based on the rate of change process variable, the rate of change high limit, and the rate of change low limit; perform gain adaptive stepping on the integrating control variable using the rate of change process variable, the rate of change high limit, and the rate of change low limit; determine at least a first set point for at least a first manipulated variable corresponding to the integrating control variable based on the gain adaptive stepping previously performed; and output the at least the first set point for the at least the first manipulated variable to adjust the process.

Example 16 includes the non-transitory computer-readable medium of Example 15, wherein the set of instructions, when executed by at least one processor, further cause the at least one processor to: perform gain adaptive stepping on a self-regulating control variable of the process; determine at least a second set point for at least a second manipulated variable corresponding to the self-regulating control variable; and outputting the at least the second set point for the at least the first manipulated variable corresponding to the self-regulating control variable.

Example 17 includes the non-transitory computer-readable medium of any of Examples 15-16, wherein the set of instructions, when executed by at least one processor, cause the at least one processor to: output the at least the first set point for the at least one manipulated variable to adjust the process at least in part by causing the at least one processor to: output the at least the first set point for the at least one manipulated variable to the process controller.

Example 18 includes the non-transitory computer-readable medium of any of Examples 15-17, wherein the set of instructions, when executed by at least one processor, cause the at least one processor to: output the at least the first set point for the at least one manipulated variable to adjust the process at least in part by being configured to: output the at least the first set point for the at least one manipulated variable to at least a first set point circuitry.

Example 19 includes the non-transitory computer-readable medium of any of Examples 15-18, wherein the set of instructions, when executed by at least one processor, cause the at least one processor to: receive the rate of change process variable, the rate of change high limit, and the rate of change low limit for the integrating control variable of the process from the process controller used to control the process via at least one network interface.

Example 20 includes the non-transitory computer-readable medium of any of Examples 15-19, wherein the integrating control variable is selected from: a tank level; a cumulative flow; or a pressure control.

**Claims**

1. A system, comprising:

   at least one processor; and
   at least one memory communicatively coupled to the at least one processor, the at least one memory storing computer readable instructions that when executed by the at least one processor causes the at least one processor to:

   receive a rate of change process variable, a rate of change high limit, and a rate of change low limit for an integrating control variable of a process from a process controller used to control the process;
   determine whether a constraint violation has occurred on the integrating control variable of the process based on the rate of change process variable, the rate of change high limit, and the rate of change low limit;
   perform gain adaptive stepping on the integrating control variable using the rate of change process variable, the rate of change high limit, and the rate of change low limit;
   determine at least a first set point for at least a first manipulated variable corresponding to the integrating control variable based on the gain adaptive stepping previously performed; and
   output the at least the first set point for the at least the first manipulated variable to adjust the process.

2. The system of claim 1, wherein the computer readable instructions, when executed by the at least one processor, further causes the at least one processor to:

   perform gain adaptive stepping on a self-regulating control variable of the process;
   determine at least a second set point for at least a second manipulated variable corresponding to the self-regulating control variable; and
   outputting the at least the second set point for the at least the first manipulated variable corresponding to the self-regulating control variable.

3. The system of claim 1, wherein the computer readable instructions, when executed by the at least one processor, causes the at least one processor to:
   output the at least the first set point for the at least one manipulated variable to adjust the process at least in part by being configured to:
   output the at least the first set point for the at least one manipulated variable to the process controller.

4. The system of claim 1, wherein the computer readable instructions, when executed by the at least one processor, causes the at least one processor to:
   output the at least the first set point for the at least one manipulated variable to adjust the process at least in part by being configured to:
   output the at least the first set point for the at least one manipulated variable to at least a first set point circuitry.

5. The system of claim 1, further comprising:
   at least one network interface configured to:
   receive the rate of change process variable, the rate of change high limit, and the rate of change low limit for the integrating control variable of the process from the process controller used to control the process.

6. The system of claim 1, further comprising:

   wherein the at least the first set point comprises a plurality of set points; and
   wherein the at least the first manipulated variable comprises a plurality of manipulated variables.

7. The system of claim 1, wherein the integrating control variable is selected from:

   a tank level;
   a cumulative flow; or
   a pressure control.

8. A method comprising:

   receiving a rate of change process variable, a rate of change high limit, and a rate of change low limit for an integrating control variable of a process from a process controller used to control the process;
   determining whether a constraint violation has occurred on the integrating control variable of the process based on the rate of change process variable, the rate of change high limit, and the rate of change low limit;
   performing gain adaptive stepping on the integrating control variable using the rate of change process variable, the rate of change high limit, and the rate of change low limit;
   determining at least a first set point for at least a first manipulated variable corresponding to the integrating control variable based on the gain adaptive stepping previously performed; and
   outputting the at least the first set point for the at least the first manipulated variable to adjust the process.

9. The method of claim 8, further comprising:

   performing gain adaptive stepping on a self-regulating control variable of the process;
   determining at least a second set point for at least a second manipulated variable corresponding to the self-regulating control variable; and
   outputting the at least the second set point for the at least the first manipulated variable corresponding to the self-regulating control variable.

10. The method of claim 8, wherein outputting the at least the first set point for the at least the first manipulated variable to adjust the process includes:
    outputting the at least the first set point for the at least one manipulated variable to the process controller.

11. The method of claim 8, wherein outputting the at least the first set point for the at least the first manipulated variable to adjust the process includes:
    outputting the at least the first set point for the at least one manipulated variable to at least a first set point circuitry.

12. The method of claim 8, further comprising:
    receiving the rate of change process variable, the rate of change high limit, and the rate of change low limit for the integrating control variable of the process from the process controller used to control the process via at least one network interface.

13. The method of claim 8, further comprising:

    wherein the at least the first set point comprises a plurality of set points; and
    wherein the at least the first manipulated variable comprises a plurality of manipulated variables.

14. The method of claim 8, wherein the integrating control variable is selected from:

    a tank level;
    a cumulative flow; or
    a pressure control.

15. A non-transitory computer-readable medium including a set of instructions that, when executed by at least one processor, cause the at least one processor to:

    receive a rate of change process variable, a rate of change high limit, and a rate of change low limit for an integrating control variable of a process from a process controller used to control the process;
    determine whether a constraint violation has occurred on the integrating control variable of the process based on the rate of change process variable, the rate of change high limit, and the rate of change low limit;
    perform gain adaptive stepping on the integrating control variable using the rate of change process variable, the rate of change high limit, and the rate of change low limit;
    determine at least a first set point for at least a first manipulated variable corresponding to the integrating control variable based on the gain adaptive stepping previously performed; and
    output the at least the first set point for the at least the first manipulated variable to adjust the process.

FIG. 1

*FIG. 2*

300

RECEIVE RATE OF CHANGE PROCESS VARIABLE,
RATE OF CHANGE HIGH LIMIT, AND RATE OF CHANGE LOW LIMIT
FOR INTEGRATING CONTROL VARIABLE OF PROCESS FROM
PROCESS CONTROLLER USED TO CONTROL PROCESS
302

DETERMINE WHETHER CONSTRAINT VIOLATION HAS
OCCURRED ON INTEGRATING CONTROL VARIABLE OF PROCESS
BASED ON RATE OF CHANGE PROCESS VARIABLE,
RATE OF CHANGE HIGH LIMIT, AND RATE OF CHANGE LOW LIMIT
304

PERFORM GAIN ADAPTIVE STEPPING ON INTEGRATING
CONTROL VARIABLE USING RATE OF CHANGE PROCESS VARIABLE,
RATE OF CHANGE HIGH LIMIT, AND RATE OF CHANGE LOW LIMIT
306

DETERMINE AT LEAST FIRST SET POINT FOR AT LEAST
FIRST MANIPULATED VARIABLE CORRESPONDING TO
INTEGRATING CONTROL VARIABLE BASED ON
GAIN ADAPTIVE STEPPING PREVIOUSLY PERFORMED
308

OUTPUTTING AT LEAST FIRST SET POINT FOR AT LEAST
FIRST MANIPULATED VARIABLE TO ADJUST PROCESS
310

*FIG. 3*

COMPUTING SYSTEM(S)
400

PROCESSOR(S)
402

MEMORY(S)
404

NETWORK
INTERFACE(S)
406

DISPLAY
DEVICE
408

INPUT
DEVICE
410

POWER
SOURCE
412

*FIG. 4*

Europäisches
Patentamt
European
Patent Office
Office européen
des brevets

# EUROPEAN SEARCH REPORT

**Application Number**

EP 25 20 0466

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/090202 A1 (NENMENI VIJAY ANAND RAGHAVENDRAN [US] ET AL) 2 April 2015 (2015-04-02) * paragraph [0004] - paragraph [0030] * * figure 7 * | 1-15 | INV. G05B13/04 |
| X | US 2020/386121 A1 (MEYER JOHN LAWRENCE [US] ET AL) 10 December 2020 (2020-12-10) | 1,3,4, 6-8,10, 11,13-15 | |
| A | * paragraph [0053] - paragraph [0060] * * figure 3 * | 2,5,9,12 | |
| X | US 4 474 012 A (CHAMBERLAIN HARVEY H [US]) 2 October 1984 (1984-10-02) | 1,3,4, 6-8,10, 11,13-15 | |
| A | * column 2 - column 4 * | 2,5,9,12 | |
| A | Seborg Dale E. ET AL: "Chapter 20 Model Predictive Control" In: "Process Dynamics and Control", 1 January 2017 (2017-01-01), Wiley, XP093237053, ISBN: 978-1-119-28591-5 pages 368-394, * the whole document * | 1-15 | |

**TECHNICAL FIELDS SEARCHED (IPC)**

G05B

The present search report has been drawn up for all claims

| Place of search | Date of completion of the search | Examiner |
|---|---|---|
| The Hague | 4 February 2026 | Zake, Zane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 0466

This annex lists the patent family members relating to the patent documents cited in the above-mentioned European search report.
The members are as contained in the European Patent Office EDP file on
The European Patent Office is in no way liable for these particulars which are merely given for the purpose of information.

04-02-2026

| Patent document cited in search report | | Publication date | Patent family member(s) | | Publication date |
|---|---|---|---|---|---|
| US 2015090202 | A1 | 02-04-2015 | NONE | | |
| US 2020386121 | A1 | 10-12-2020 | NONE | | |
| US 4474012 | A | 02-10-1984 | JP | H0432921 B2 | 01-06-1992 |
| | | | JP | S6062606 A | 10-04-1985 |
| | | | US | 4474012 A | 02-10-1984 |

EPO FORM P0459

For more details about this annex : see Official Journal of the European Patent Office, No. 12/82